# EUROPEAN PATENT APPLICATION

(11) **EP 4 535 032 A1**
(43) Date of publication of application: **09.04.2025**
(21) Application number: 23816010.5
(22) Date of filing: 29.05.2023
(51) Int. Cl.: G01S 7/497, G01S 17/894

(54) **DISTANCE IMAGE CAPTURING DEVICE AND DISTANCE IMAGE CAPTURING METHOD**

(30) Priority: 02.06.2022 JP 2022090276
(71) Applicant: Toppan Holdings Inc., Tokyo 110-0016 (JP)
(72) Inventor: OOKUBO Yu, Tokyo 110-0016 (JP)
(74) Representative: Plasseraud IP
(86) International application number: PCT/JP2023/019912
(87) International publication number: WO 2023/234253

(57) **Abstract**

A range imaging device includes a light receiving unit including a plurality of pixel circuits each including a photoelectric conversion device, charge storages, and transfer transistors, and a pixel driver circuit configured to distribute and store charge in the charge storages at a predetermined storage timing synchronized with emission of a light pulse; a light source unit configured to emit the light pulse; and a range image processing unit configured to measure, as a measurement distance, a distance to a subject based on quantities of charge stored in the respective charge storages, wherein the range image processing unit detects, without emission of the light pulse, interference light based on a difference between a maximum value and a minimum value of a quantity of interference charge stored in each of the charge storages, in a cycle and the storage timing that are same as those with emission of the light pulse, before the distance is measured, and the range image processing unit changes an emission timing of the light pulse and the storage timing and measures the measurement distance in response to detection of the interference light.

## Description

### [Technical Field]

The present invention relates to a range imaging device and a range imaging method.

The present application claims priority to Japanese Patent Application No. 2022-090276 filed in Japan on June 2, 2022, the contents of which are incorporated herein by reference.

### [Background Art]

Time-of-flight (hereinafter referred to as "TOF") range imaging devices use the known speed of light to measure the distance between the measurement device and an object based on the time of flight of light in a space (measurement space) (see, for example, Patent Literature 1). In such a range imaging device, charge generated by a photoelectric conversion device is stored in a plurality of charge storages to obtain a delay time from the time at which a light pulse that is pulsed near-infrared light is emitted to the time at which a light pulse reflected from a subject returns, and the distance to the subject is calculated using the delay time and the speed of light.

### [Citation List]

### [Patent Literature]

[PTL 1] JP 4235729 B

### [Summary of the Invention]

### [Technical Problem]

However, for example, when a plurality of conventional range imaging devices are used at positions close to each other, in some cases, one of the plurality of range imaging devices cannot accurately measure the distance to a subject due to interference due to a light pulse from another one of the plurality of range imaging devices. Thus, conventional range imaging devices may have lower accuracy of distance measurement due to the influence of interference light.

The present invention has been made to solve the above problem, and an object of the present invention is to provide a range imaging device and a range imaging method capable of reducing the influence of interference light and achieving higher accuracy of distance measurement.

### [Solution to Problem]

In order to solve the above problem, an aspect (1) of the present invention is a range imaging device including: a light receiving unit including a plurality of pixel circuits each including a photoelectric conversion device configured to generate charge based on incident light that is light incident from a measurement space that is a space targeted for measurement, N charge storages each configured to store at least some of the generated charge in a predetermined integration cycle synchronized with emission of a light pulse, N being greater than or equal to 3, and transfer transistors each configured to transfer at least some of the generated charge from the photoelectric conversion device to a corresponding one of the N charge storages, and a pixel driver circuit configured to electrically connect the transfer transistors to the respective N charge storages and distribute and store at least some of the generated charge in the N charge storages at a predetermined storage timing synchronized with the emission of the light pulse; a light source unit configured to emit the light pulse to the measurement space; and a range image processing unit configured to measure, as a measurement distance, a distance to a subject that is present in the measurement space, based on quantities of charge stored in the respective N charge storages, wherein the range image processing unit causes, without emission of the light pulse, the pixel driver circuit to provide electrical connection to the transfer transistors in a cycle and storage timing that are same as those with emission of the light pulse, before the integration cycle in which the distance is measured, and detects interference light based on a difference between a maximum value and a minimum value of a quantity of interference charge stored in each of the N charge storages, and the range image processing unit changes an emission timing of the light pulse and the storage timing and measures the measurement distance in response to detection of the interference light.

According to an aspect (2) of the present invention, in the range imaging device of the aspect (1), in response to detection of the interference light, the range image processing unit changes the emission timing of the light pulse and the storage timing by changing the emission timing of the light pulse without changing the integration cycle.

According to an aspect (3) of the present invention, in the range imaging device of the aspect (1) or (2), in response to detection of the interference light, the range image processing unit changes a start timing of the integration cycle by shifting the emission timing of the light pulse so that a timing of the interference light does not overlap with the storage timing.

According to an aspect (4) of the present invention, in the range imaging device of the aspect (1), in response to detection of the interference light, the range image processing unit changes the emission timing of the light pulse and the storage timing by randomly changing the integration cycle.

According to an aspect (5) of the present invention, in the range imaging device of any one of aspects (1) to (4), the range image processing unit determines that interference light is present when the difference between the maximum value and the minimum value is greater than or equal to a threshold.

According to an aspect (6) of the present invention, in the range imaging device of any one of aspects (1) to (5), in response to there being no detection of the interference light, the range image processing unit measures the measurement distance without changing the integration cycle or a start timing of the integration cycle.

An aspect (7) of the present invention is a range imaging method for a range imaging device including: a light receiving unit including a plurality of pixel circuits each including a photoelectric conversion device configured to generate charge based on incident light that is light incident from a measurement space that is a space targeted for measurement, N charge storages each configured to store at least some of the generated charge in a predetermined integration cycle synchronized with emission of a light pulse, N being greater than or equal to 3, and transfer transistors each configured to transfer at least some of the generated charge from the photoelectric conversion device to a corresponding one of the N charge storages, and a pixel driver circuit configured to electrically connect the transfer transistors to the respective N charge storages and distribute and store at least some of the generated charge in the N charge storages at a predetermined storage timing synchronized with the emission of the light pulse; a light source unit configured to emit the light pulse to the measurement space; and a range image processing unit configured to measure, as a measurement distance, a distance to a subject that is present in the measurement space, based on quantities of charge stored in the respective N charge storages, the range imaging method including: an interference light detection step to be performed by the range image processing unit of causing, without emission of the light pulse, the pixel driver circuit to provide electrical connection to the transfer transistors in a cycle and the storage timing that are same as those with emission of the light pulse, before the integration cycle in which the distance is measured and detecting interference light based on a difference between a maximum value and a minimum value of a quantity of interference charge stored in each of the N charge storages; and a timing adjustment step to be performed by the range image processing unit of changing an emission timing of the light pulse and the storage timing and measuring the measurement distance in response to detection of the interference light.

### [Advantageous Effects of the Invention]

The present invention reduces the influence of interference light and achieves higher accuracy of distance measurement.

### [Brief Description of the Drawings]

Fig. 1 is a block diagram showing an example of a range imaging device according to a first embodiment.
Fig. 2 is a block diagram showing an example of a range imaging sensor of the first embodiment.
Fig. 3 is a block diagram showing an example of a pixel circuit of the first embodiment.
Fig. 4 is a timing diagram showing an example of a distance measurement process performed by the range imaging device according to the first embodiment.
Fig. 5 is a timing diagram showing an example of an interference light detection process performed by the range imaging device according to the first embodiment.
Fig. 6 is a timing diagram showing an example of a timing adjustment process performed by the range imaging device according to the first embodiment.
Fig. 7 is a flowchart showing an example of an operation performed by the range imaging device according to the first embodiment.
Fig. 8 is a block diagram showing an example of a range imaging device according to a second embodiment.
Fig. 9 is a timing diagram showing an example of a timing adjustment process performed by the range imaging device according to the second embodiment.
Fig. 10 is a flowchart showing an example of an operation performed by the range imaging device according to the second embodiment.

### [Description of the Embodiments]

A range imaging device and a range imaging method according to an embodiment of the present invention will be described below with reference to the drawings.

### [First embodiment]

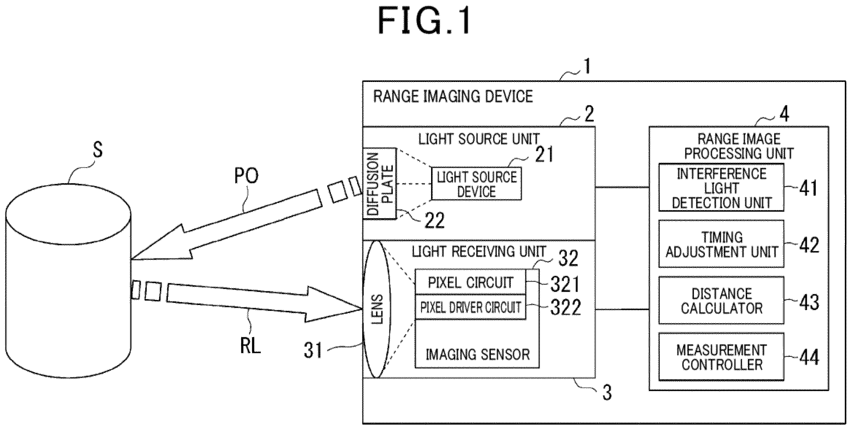

Fig. 1 is a block diagram showing an example of a range imaging device 1 according to the first embodiment.

As shown in Fig. 1, the range imaging device 1 includes a light source unit 2, a light receiving unit 3, and a range image processing unit 4. Fig. 1 also shows a subject S as an object targeted for distance measurement using the range imaging device 1. A range imaging element may be, for example, a range imaging sensor 32 (described later) of the light receiving unit 3.

The light source unit 2 emits, according to control by the range image processing unit 4, a light pulse PO to a space that is targeted for image capturing and in which the subject S is present as an object targeted for distance measurement using the range imaging device 1. The light source unit 2 may be, for example, a surface-emitting semiconductor laser module such as a vertical-cavity surface-emitting laser (VCSEL).

The light source unit 2 includes a light source device 21 and a diffusion plate 22.

The light source device 21 is a light source that emits laser light in the near-infrared wavelength region (e.g., in a wavelength range of 850 nm to 940 nm) as the light pulse PO with which the subject S is irradiated. The light source device 21 may be, for example, a semiconductor laser light-emitting device. The light source device 21 emits pulsed laser light according to control by a measurement controller 44.

The diffusion plate 22 is an optical component that diffuses laser light in the near-infrared wavelength region emitted from the light source device 21 to an area in which the subject S is irradiated with the diffused laser light. The pulsed laser light diffused by the diffusion plate 22 emerges as the light pulse PO, and the subject S is irradiated with the light pulse PO.

The light receiving unit 3 receives reflected light RL of the light pulse PO reflected by the subject S of which the distance is to be measured using the range imaging device 1, and outputs a pixel signal corresponding to the reflected light RL received. The light receiving unit 3 includes a lens 31 and the range imaging sensor 32.

The lens 31 is an optical lens that guides the reflected light RL incident on the lens 31 to the range imaging sensor 32. The reflected light RL incident on the lens 31 emerges toward the range imaging sensor 32, and is received by (incident on) pixel circuits 321 provided in a light receiving region of the range imaging sensor 32.

The range imaging sensor 32 is an imaging element used in the range imaging device 1. The range imaging sensor 32 includes the plurality of pixel circuits 321 in a two-dimensional light receiving region, and a pixel driver circuit 322 that controls each of the pixel circuits 321.

The pixel circuits 321 each include a single photoelectric conversion device (e.g., a photoelectric conversion device PD described later), a plurality of charge storages (e.g., charge storages CS (CS1 to CS4) described later) corresponding to the single photoelectric conversion device, and components each of which distributes the charge to a corresponding one of the charge storages.

The pixel driver circuit 322 electrically connects transfer transistors G (described later) to the respective charge storages CS (CS1 to CS4) and distributes and stores the charge in the charge storages CS at a predetermined storage timing synchronized with emission of the light pulse PO.

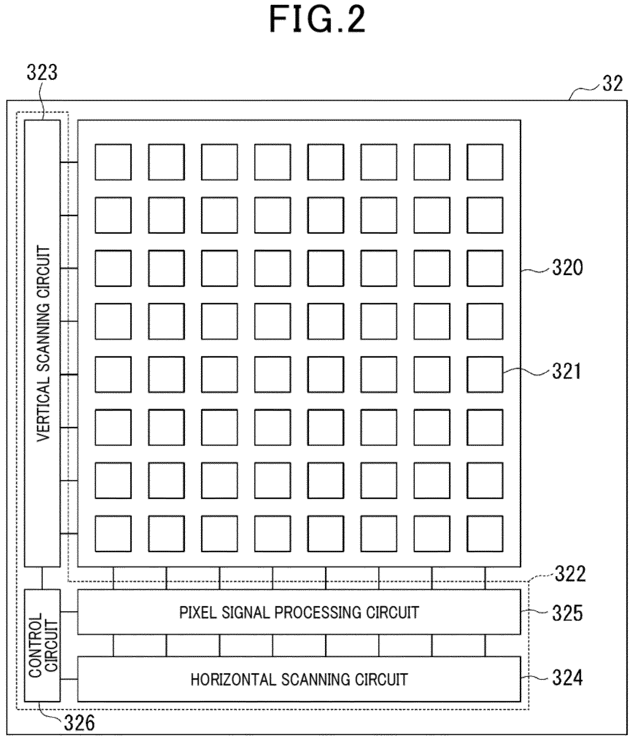

The details of the range imaging sensor 32 including the pixel circuits 321 and the pixel driver circuit 322 will be described later with reference to Fig. 2.

The range imaging sensor 32 distributes charge generated by the photoelectric conversion device to each of the charge storages, according to control by the measurement controller 44. Furthermore, the range imaging sensor 32 outputs a pixel signal corresponding to the quantity of charge distributed to each of the charge storages. The range imaging sensor 32 includes the plurality of pixel circuits arranged in a two-dimensional matrix, and outputs each pixel signal for one frame for the individual pixel circuits.

A detailed configuration of the range imaging sensor 32 will be described below with reference to Fig. 2.

Fig. 2 is a block diagram showing an example of the range imaging sensor of the present embodiment.

As shown in Fig. 2, the range imaging sensor 32 includes, for example, the light receiving region 320 in which the plurality of pixel circuits 321 are arranged, and the pixel driver circuit 322. The pixel driver circuit 322 includes a vertical scanning circuit 323 that performs distribution operation, a horizontal scanning circuit 324, a pixel signal processing circuit 325, and a control circuit 326.

The light receiving region 320 is a region in which the plurality of pixel circuits 321 are arranged. Fig. 2 shows an example in which the pixel circuits 321 are arranged in a two-dimensional matrix with 8 rows and 8 columns.

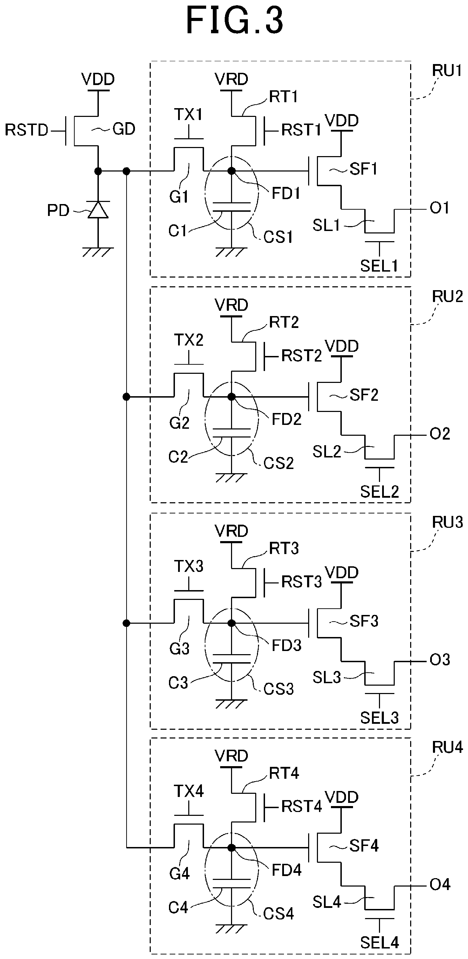

The pixel circuits 321 store charge corresponding to the amount of light received. A detailed configuration of the pixel circuits 321 will be described later with reference to Fig. 3.

The control circuit 326 performs overall control of the range imaging sensor 32. The control circuit 326 controls the operation of the components of the range imaging sensor 32, for example, according to instructions from the measurement controller 44 of the range image processing unit 4. The components of the range imaging sensor 32 may be directly controlled by the measurement controller 44, and in such a case, the control circuit 326 may be omitted.

The vertical scanning circuit 323 is a circuit that controls, for each row, the pixel circuits 321 arranged in the light receiving region 320, according to control by the control circuit 326. The vertical scanning circuit 323 causes the pixel circuits 321 to output, to the pixel signal processing circuit 325, each voltage signal corresponding to the quantity of charge stored in the individual charge storages CS of the pixel circuits 321. In this case, the vertical scanning circuit 323 distributes and stores charge generated through conversion by the photoelectric conversion device to each of the charge storages of the pixel circuits 321.

The pixel signal processing circuit 325 performs predetermined signal processing (e.g., noise suppression processing, A/D conversion processing, etc.) to the voltage signals output from the pixel circuits 321 in each row, according to control by the control circuit 326.

The horizontal scanning circuit 324 is a circuit that causes a signal output from the pixel signal processing circuit 325 to be sequentially output in a time series manner, according to control by the control circuit 326. Thus, a pixel signal corresponding to the quantity of charge stored for one frame is sequentially output to the range image processing unit 4. The following description assumes that the pixel signal processing circuit 325 performs A/D conversion processing, and the pixel signal is a digital signal.

Next, a configuration of the pixel circuits 321 arranged in the light receiving region 320 of the range imaging sensor 32 will be described with reference to Fig. 3.

Fig. 3 is a block diagram showing an example of one of the pixel circuits 321 of the present embodiment.

The pixel circuit 321 shown in Fig. 3 is a configuration example including four pixel signal reading units RU (RU1 to RU4).

As shown in Fig. 3, the pixel circuit 321 includes a single photoelectric conversion device PD, a charge drainage transistor GD, and the four pixel signal reading units RU (RU1 to RU4) each of which outputs a voltage signal from the corresponding one of output terminals O (O1 to O4). The pixel signal reading units RU each include a transfer transistor G, a floating diffusion FD, a charge storage capacitor C, a reset transistor RT, a source follower transistor SF, and a selection transistor SL. The floating diffusion FD and the charge storage capacitor C constitute a charge storage CS.

In the pixel circuit 321 shown in Fig. 3, the pixel signal reading unit RU1 that outputs a voltage signal from the output terminal O1 includes a transfer transistor G1, a floating diffusion FD1, a charge storage capacitor C1, a reset transistor RT1, a source follower transistor SF1, and a selection transistor SL1. In the pixel signal reading unit RU1, the floating diffusion FD1 and the charge storage capacitor C1 constitute the charge storage CS1. The pixel signal reading units RU2 to RU4 also have the same configuration.

The photoelectric conversion device PD is an embedded photodiode that performs photoelectric conversion of incident light to generate charge based on the incident light and stores the generated charge. In the present embodiment, incident light is incident from a space targeted for measurement.

In the pixel circuit 321, the charge generated through photoelectric conversion of the incident light by the photoelectric conversion device PD are distributed to each of the four charge storages CS (CS1 to CS4), and each voltage signal corresponding to the quantity of charge distributed is output to the pixel signal processing circuit 325.

The configuration of the pixel circuits arranged in the range imaging sensor 32 is not limited to the configuration including the four pixel signal reading units RU (RU1 to RU4) as shown in Fig. 3, and the pixel circuits may include one or more pixel signal reading units RU.

When the pixel circuits 321 are driven, the light pulse PO is emitted at an emission time To, and after a delay time Td, the reflected light RL is received by the range imaging sensor 32. According to control by the measurement controller 44, the pixel driver circuit 322 supplies, in synchronization with emission of the light pulse PO, storage driving signals TX1 to TX4 to the transfer transistors G (G1, G2, G3, G4) at different timings to transfer and store the charge generated by the photoelectric conversion device PD in the charge storages CS1, CS2, CS3, and CS4 in this order.

The pixel driver circuit 322 controls the reset transistors RT and the selection transistors SL using driving signals RST and driving signals SEL, respectively, to convert the charge stored in the charge storages CS into electrical signals using the source follower transistors SF, and outputs the generated electrical signals to a distance calculator 43 via the output terminals O.

The pixel driver circuit 322 transfers, according to control by the measurement controller 44, the charge generated by the photoelectric conversion device PD to a power supply VDD using a driving signal RSTD to discharge (remove) the charge.

Returning to Fig. 1, the range image processing unit 4 controls the range imaging device 1 to calculate the distance to the subject S. The range image processing unit 4 measures, as a measurement distance, the distance to the subject S that is present in a measurement space, based on the quantities of charge stored in the respective charge storages CS.

The range image processing unit 4 includes an interference light detection unit 41, a timing adjustment unit 42, the distance calculator 43, and the measurement controller 44.

The distance calculator 43 outputs, according to control by the measurement controller 44, distance information (quantized as a gradient) obtained by calculating the distance from the range imaging device 1 (pixels) to the subject S, based on the pixel signal (voltage value corresponding to the quantity of stored charge) output from the range imaging sensor 32.

The distance calculator 43 calculates the delay time Td from the time at which the light pulse PO is emitted to the time at which the reflected light RL is received, based on the quantity of charge stored in the plurality of charge storages CS. The distance calculator 43 calculates the distance from the range imaging device 1 to the subject S according to the calculated delay time Td.

The measurement controller 44 controls the calculation performed by the distance calculator 43 by controlling the timing of outputting various control signals required for distance measurement. The various control signals include, for example, a signal for controlling emission of the light pulse PO, a signal for distributing the reflected light RL to the plurality of charge storages (storage driving signals TX for operating the transfer transistors G described later), and a signal for controlling the number of distributions per frame. The number of distributions is the number of repetitions of the process of distributing charge generated from incident light by the photoelectric conversion device PD to the charge storages CS via the transfer transistors G.

The measurement controller 44 causes the light source unit 2 to emit the light pulse PO in an integration cycle, and acquires, from the light receiving unit 3, the quantity of charge distributed and stored in the charge storages CS at a predetermined storage timing synchronized with emission of the light pulse PO. The measurement controller 44 causes the distance calculator 43 to calculate the measurement distance using the quantities of charge stored in the respective charge storages CS acquired from the light receiving unit 3. The integration cycle is a predetermined cycle synchronized with the light pulse PO, and is repeated for the number of distributions in one frame during distance measurement.

The interference light detection unit 41 causes, without emission of the light pulse PO, the pixel driver circuit 322 to provide electrical connection to the transfer transistors G in a cycle and storage timing the same as (or equivalent to) those with emission of the light pulse PO, before the integration cycle in which the distance is measured by the measurement controller 44 described above. The interference light detection unit 41 detects, without emission of the light pulse PO, interference light based on the difference between the maximum value and the minimum value of the quantity of interference charge stored in each of the charge storages CS.

The interference light detection unit 41 determines that interference light is present, for example, when the difference between the maximum value and the minimum value of the quantity of interference charge is greater than or equal to a predetermined threshold. Furthermore, the interference light detection unit 41 determines that no interference light is present, for example, when the difference between the maximum value and the minimum value of the quantity of interference charge is less than a predetermined threshold.

The timing adjustment unit 42 changes the emission timing of the light pulse PO and the storage timing in response to detection of interference light by the interference light detection unit 41. That is, in response to detection of interference light by the interference light detection unit 41, the timing adjustment unit 42 changes the timing of control performed by the measurement controller 44.

In response to detection of interference light by the interference light detection unit 41, the timing adjustment unit 42 changes the emission timing of the light pulse PO and the storage timing by changing the emission timing of the light pulse PO without changing the integration cycle. Specifically, in response to detection of interference light, the range image processing unit 4 changes the start timing of the integration cycle by shifting the emission timing of the light pulse PO so that the timing of the interference light does not overlap with the storage timing.

Due to the change in the start timing of the integration cycle performed by the timing adjustment unit 42, in response to detection of interference light by the interference light detection unit 41, the measurement controller 44 causes the distance calculator 43 to calculate the measurement distance, by performing control based on the start timing of the integration cycle changed so that the timing of the interference light does not overlap with the storage timing.

In response to there being no detection of interference light by the interference light detection unit 41, the range image processing unit 4 (measurement controller 44) measures the measurement distance without changing the integration cycle or the start timing of the integration cycle. That is, in response to there being no detection of interference light by the interference light detection unit 41, the timing adjustment unit 42 does not perform the timing adjustment described above.

Next, an operation performed by the range imaging device 1 according to the present embodiment will be described with reference to the drawings.

First, basic operation of distance measurement performed by the range imaging device 1 will be described with reference to Figs. 1 to 3.

When the pixel circuits 321 of the range imaging device 1 are driven, the light pulse PO is emitted at the emission time To, and after the delay time Td, the reflected light RL is received by the range imaging sensor 32. In synchronization with emission of the light pulse PO, the vertical scanning circuit 323 transfers and stores the charge generated by the photoelectric conversion device PD in the charge storages CS1, CS2, CS3, and CS4 in this order.

At this time, the vertical scanning circuit 323 causes the transfer transistor G1 to be in an ON state (conductive state). The transfer transistor G1 is provided on a transfer path through which charge is transferred from the photoelectric conversion device PD to the charge storage CS1. Thus, charge generated through photoelectric conversion by the photoelectric conversion device PD is stored in the charge storage CS1 via the transfer transistor G1. Then, the vertical scanning circuit 323 causes the transfer transistor G1 to be in an OFF state (non-conductive state). This stops the transfer of charge to the charge storage CS1. Thus, the vertical scanning circuit 323 causes charge to be stored in the charge storage CS1. The same applies to the charge storages CS2 to CS4.

In this case, storage cycles are repeated in a charge storage period in which charge is distributed to the charge storages CS. In the storage cycles, the storage driving signals TX1 to TX4 are supplied to the transfer transistors G1 to G4, respectively.

Charge based on the incident light is transferred from the photoelectric conversion device PD to the charge storages CS1 to CS4 via the transfer transistors G1 to G4, respectively. A plurality of storage cycles are repeated in the charge storage period.

Thus, for the storage cycles of the charge storages CS1 to CS4 in the charge storage period, charge is stored in the charge storages CS1 to CS4, respectively.

When the storage cycles of the charge storages CS1 to CS4 are repeated, after the transfer of charge to the charge storage CS4 is ended, the vertical scanning circuit 323 turns on the charge drainage transistor GD provided on a discharge path through which the charge is discharged from the photoelectric conversion device PD.

Thus, before the storage cycle of the charge storage CS1 is started, the charge drainage transistor GD removes the charge generated by the photoelectric conversion device PD after the preceding storage cycle of the charge storage CS4 (i.e., resets the photoelectric conversion device PD).

The vertical scanning circuit 323 causes, for each row (the array in the lateral direction) of the pixel circuits 321, each of all the pixel circuits 321 arranged in the light receiving region 320 to sequentially output a voltage signal to the pixel signal processing circuit 325.

The pixel signal processing circuit 325 performs signal processing such as A/D conversion processing to each of the input voltage signals, and outputs the voltage signal subjected to the signal processing to the horizontal scanning circuit 324.

The horizontal scanning circuit 324 causes the voltage signal subjected to the signal processing to be sequentially output to the distance calculator 43 in the order of the rows in the light receiving region 320.

The vertical scanning circuit 323 repeatedly performs, over one frame, the storage of charge in the charge storages CS and the removal of the charge generated through photoelectric conversion by the photoelectric conversion device PD as described above. Thus, the charge corresponding to the amount of light received by the range imaging device 1 during a predetermined time period is stored in each of the charge storages CS. The horizontal scanning circuit 324 outputs, to the distance calculator 43, each electrical signal corresponding to the quantity of charge for one frame stored in the individual charge storages CS.

The distance calculator 43 calculates the delay time Td based on the charge quantities Q1 to Q4 stored in the respective charge storages CS. The distance calculator 43 multiplies the calculated delay time Td by the speed of light (speed) to calculate the round-trip distance to the subject S.

Then, the distance calculator 43 calculates 1/2 of the calculated round-trip distance to obtain the distance to the subject S.

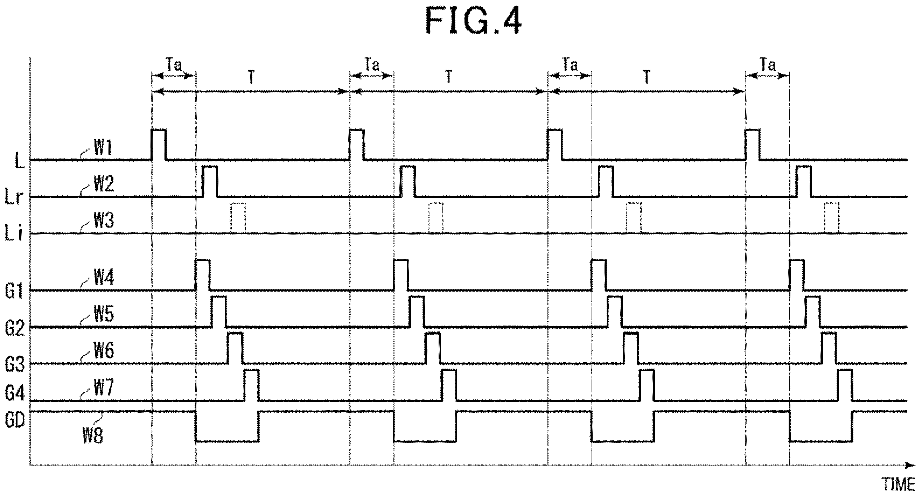

Fig. 4 is a timing diagram showing an example of a distance measurement process performed by the range imaging device 1 according to the present embodiment. The following describes the distance measurement process performed when no interference light is present.

In Fig. 4, waveforms W1 to W8 represent, from top to bottom, a signal L indicating an emission timing of the light pulse PO, a signal Lr indicating an incidence timing of the reflected light RL, a signal Li indicating an incidence timing of interference light, conduction timings of the transfer transistors G (G1 to G4), and a conduction timing of the charge drainage transistor GD. The horizontal axis indicates time.

In Fig. 4, a period Ta represents a period from the start of emission of the light pulse PO to the start of conduction of the transfer transistor G1. A cycle T represents a light emission cycle (integration cycle).

Fig. 4 shows an example in which the reflected light RL is incident on the transfer transistor G1 (waveform W4) and the transfer transistor G2 (waveform W5).

For example, as in a portion of the waveform W3 indicated by the dashed line, when interference light is incident on the transfer transistor G3 (waveform W6) and the transfer transistor G4 (waveform W7), charge is stored not only in the charge storage CS1 and the charge storage CS2 but also in the charge storage CS3 and the charge storage CS4. Thus, in such a case, conventional range imaging devices may have lower accuracy of distance measurement.

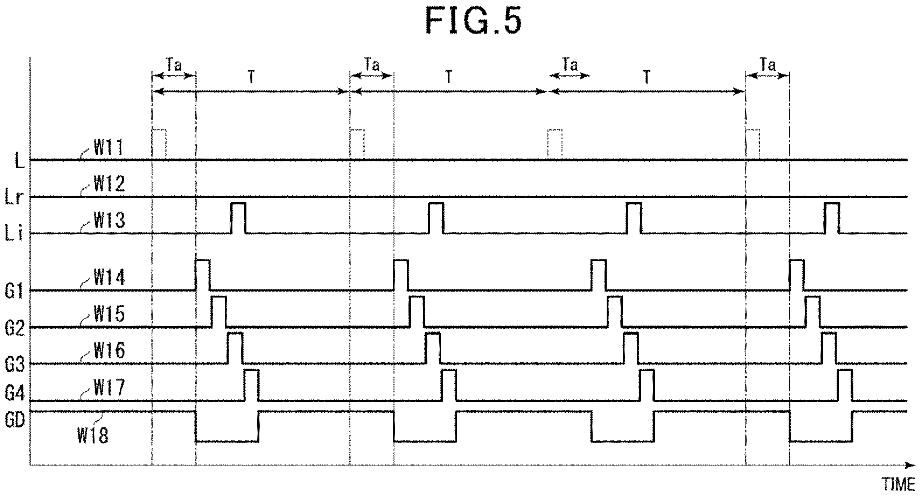

However, before the distance is measured at the timings as shown in Fig. 4, as shown in Fig. 5, the range imaging device 1 according to the present embodiment provides, without emission of the light pulse PO, electrical connection to the transfer transistors G (G1 to G4), and detects whether interference light is present.

Interference light here refers to light (interference light) periodically incident in a cycle equivalent to the cycle of the light pulse PO of the range imaging device 1. Interference light may be, for example, a light pulse that is emitted from one of a plurality of range imaging devices 1 used at positions close to each other and is incident on another one of the plurality of range imaging devices 1.

Fig. 5 is a timing diagram showing an example of an interference light detection process performed by the range imaging device 1 according to the present embodiment.

In Fig. 5, waveforms W11 to W18 represent, from top to bottom, the same items as those represented by the waveforms W1 to W8 in Fig. 4 described above. The horizontal axis indicates time.

In the example shown in Fig. 5, as in the example shown in Fig. 4, interference light is incident on the transfer transistor G3 (waveform W16) and the transfer transistor G4 (waveform W17), and charge is stored in the charge storage CS3 and the charge storage CS4. Therefore, the difference between the maximum value (charge quantity Q3 or Q4) and the minimum value (charge quantity Q1 or Q2) of the quantity of interference charge is greater than or equal to a predetermined threshold; thus, the interference light detection unit 41 determines that interference light is present.

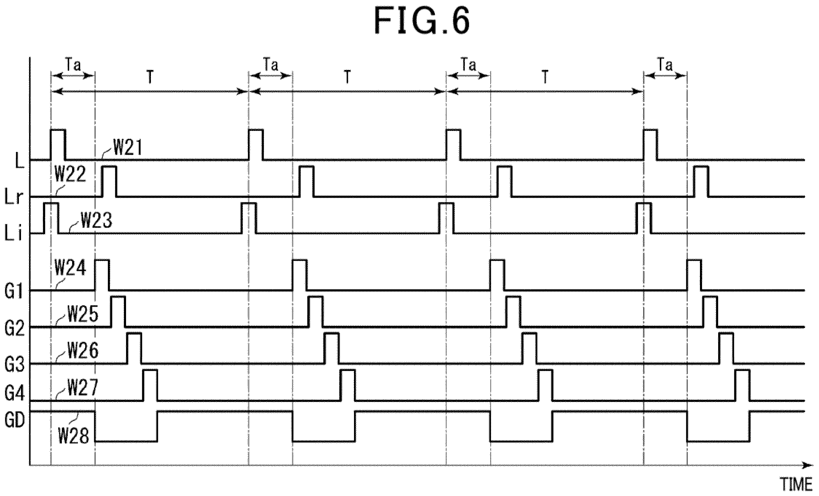

Fig. 6 is a timing diagram showing an example of a timing adjustment process performed by the range imaging device 1 according to the present embodiment.

In Fig. 6, waveforms W21 to W28 represent, from top to bottom, the same items as those represented by the waveforms W1 to W8 in Fig. 4 described above. The horizontal axis indicates time.

The example in Fig. 6 shows the timing adjustment process performed when the presence of interference light is detected by the interference light detection process shown in Fig. 5. As shown in Fig. 6, the timing adjustment unit 42 changes the start timing of the integration cycle by shifting the emission timing of the light pulse PO so that the timing of the interference light does not overlap with the storage timing.

In the example shown in Fig. 6, the timing adjustment unit 42 shifts the start timing of emission of the light pulse PO (waveform W23 and waveform W28) so that the incidence timing of the interference light (signal Li) overlaps with the OFF period (drain period) of the charge drainage transistor GD, without changing the period Ta or the integration cycle T.

The timing adjustment unit 42 may determine the start timing of emission of the light pulse PO (start timing of the integration cycle T) by alternately performing the process in which the start timing of emission of the light pulse PO (start timing of the integration cycle T) is shifted and changed and the process in which interference light is detected by the interference light detection unit 41 without emission of the light pulse PO, until the difference between the maximum value and the minimum value of the quantity of interference charge becomes less than the threshold.

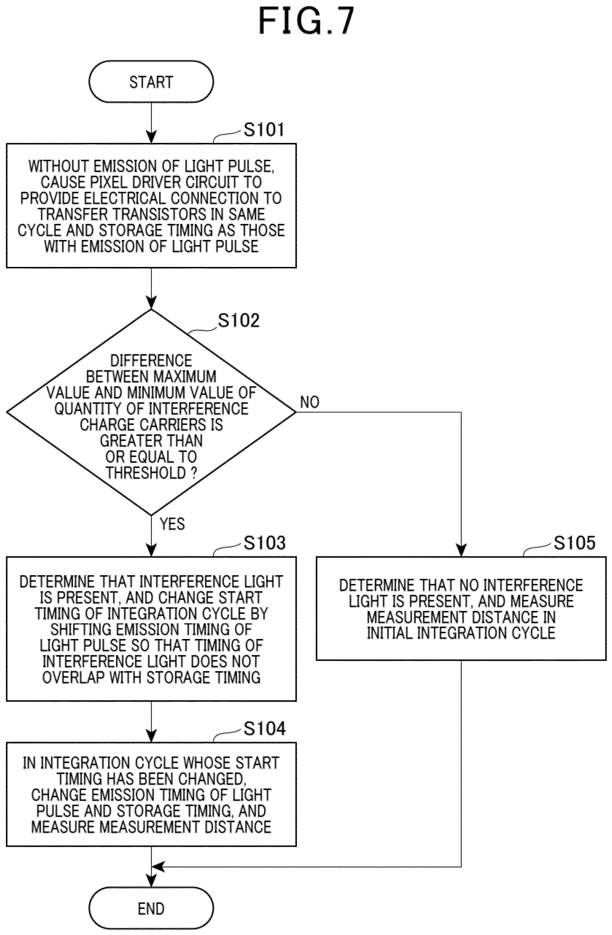

Fig. 7 is a flowchart showing an example of an operation performed by the range imaging device 1 according to the present embodiment.

As shown in Fig. 7, first, the range imaging device 1 causes, without emission of the light pulse PO, the pixel driver circuit 322 to provide electrical connection to the transfer transistors G in the same cycle and storage timing as those with emission of the light pulse PO (step S101). For example, as shown in Fig. 5, the interference light detection unit 41 of the range imaging device 1 causes the transfer transistors G (G1 to G4) to be sequentially in the ON state.

Next, the interference light detection unit 41 determines whether the difference between the maximum value and the minimum value of the quantity of interference charge is greater than or equal to a threshold (step S102). The interference light detection unit 41 detects whether interference light is present based on whether the difference between the maximum value and the minimum value of the quantity of interference charge is greater than or equal to the threshold. When the difference between the maximum value and the minimum value of the quantity of interference charge is greater than or equal to the threshold (YES in step S102), the interference light detection unit 41 causes the process to proceed to step S103. When the difference between the maximum value and the minimum value of the quantity of interference charge is less than the threshold (NO in step S102), the interference light detection unit 41 causes the process to proceed to step S105.

In step S103, the range imaging device 1 determines that interference light is present, and changes the start timing of the integration cycle by shifting the emission timing of the light pulse PO so that the timing of the interference light does not overlap with the storage timing. The interference light detection unit 41 determines that interference light is present, and for example, as shown in Fig. 6, the timing adjustment unit 42 of the range imaging device 1 changes the start timing of the integration cycle by shifting the emission timing of the light pulse PO.

Next, in the integration cycle whose start timing has been changed, the range imaging device 1 changes the emission timing of the light pulse PO and the storage timing, and measures the measurement distance (step S104). For example, as shown in Fig. 6, the measurement controller 44 changes and controls the emission timing of the light pulse PO and the storage timing, and the distance calculator 43 acquires the charge quantities Q1 to Q4 stored in the respective charge storages CS, and calculates the delay time Td based on the charge quantities Q1 to Q4 stored in the respective charge storages CS. The distance calculator 43 multiplies the calculated delay time Td by the speed of light (speed) to calculate the round-trip distance to the subject S. After step S104, the range imaging device 1 ends the process.

In step S105, the range imaging device 1 determines that no interference light is present, and measures the measurement distance in the initial integration cycle. For example, as shown in Fig. 4, the measurement controller 44 controls the emission timing of the light pulse PO and the storage timing, and the distance calculator 43 acquires the charge quantities Q1 to Q4 stored in the respective charge storages CS, and calculates the delay time Td based on the charge quantities Q1 to Q4 stored in the respective charge storages CS. The distance calculator 43 multiplies the calculated delay time Td by the speed of light (speed) to calculate the round-trip distance to the subject S. After step S105, the range imaging device 1 ends the process.

As described above, the range imaging device 1 according to the present embodiment includes the light receiving unit 3, the light source unit 2, and the range image processing unit 4. The light receiving unit 3 includes the plurality of pixel circuits 321 and the pixel driver circuit 322. The plurality of pixel circuits 321 each include the photoelectric conversion device PD, N (N ≥ 3) charge storages CS, and the transfer transistors G. The photoelectric conversion device PD generates charge based on incident light that is light incident from a measurement space that is a space for which measurement is to be performed. The N (N ≥ 3) charge storages CS store charge in a predetermined integration cycle synchronized with emission of the light pulse. The transfer transistors G each transfer charge from the photoelectric conversion device PD to the corresponding one of the charge storages CS. The pixel driver circuit 322 electrically connects the transfer transistors G to the respective charge storages CS and distributes and stores charge in the charge storages CS at a predetermined storage timing synchronized with emission of the light pulse PO. The light source unit 2 emits the light pulse PO to the measurement space. The range image processing unit 4 measures, as a measurement distance, the distance to the subject S that is present in a measurement space, based on the quantities of charge stored in the respective charge storages CS. Furthermore, the range image processing unit 4 causes, without emission of the light pulse PO, the pixel driver circuit 322 to provide electrical connection to the transfer transistors G in the same cycle and storage timing as those with emission of the light pulse PO, before the integration cycle in which the distance is measured, and detects interference light based on the difference between the maximum value and the minimum value of the quantity of interference charge stored in each of the charge storages CS. Then, the range image processing unit 4 changes the emission timing of the light pulse PO and the storage timing and measures the measurement distance in response to detection of interference light.

Therefore, the range imaging device 1 according to the present embodiment changes the emission timing of the light pulse PO and the storage timing and measures the measurement distance in response to detection of interference light; thus, the range imaging device 1 can reduce the influence of interference light and achieve higher accuracy of distance measurement.

In the present embodiment, in response to detection of interference light, the range image processing unit 4 changes the emission timing of the light pulse PO and the storage timing by changing the emission timing of the light pulse PO without changing the integration cycle. That is, in response to detection of interference light, the range image processing unit 4 changes the start timing of the integration cycle by shifting the emission timing of the light pulse PO so that the timing of the interference light does not overlap with the storage timing.

Therefore, for example, as shown in Fig. 6, the range imaging device 1 according to the present embodiment shifts the emission timing of the light pulse PO so that the timing of the interference light does not overlap with the storage timing, and thus can properly reduce the influence of interference light using a simple method.

In the present embodiment, the range image processing unit 4 determines that interference light is present when the difference between the maximum value and the minimum value of the quantity of interference charge is greater than or equal to a threshold.

This enables the range imaging device 1 according to the present embodiment to properly detect interference light using a simple method.

In the present embodiment, in response to there being no detection of interference light, the range image processing unit 4 measures the measurement distance without changing the integration cycle or the start timing of the integration cycle.

This enables the range imaging device 1 according to the present embodiment to properly reduce the influence of interference light.

In the present embodiment, the timing adjustment unit 42 may determine the start timing of emission of the light pulse PO (start timing of the integration cycle T) by alternately performing the process in which the start timing of emission of the light pulse PO (start timing of the integration cycle T) is shifted and changed and the process in which interference light is detected by the interference light detection unit 41 without emission of the light pulse PO, until the difference between the maximum value and the minimum value of the quantity of interference charge becomes less than the threshold.

This enables the range imaging device 1 according to the present embodiment to properly determine the start timing of emission of the light pulse PO (start timing of the integration cycle T) so that the timing of the interference light does not overlap with the storage timing.

The range imaging method according to the present embodiment is a range imaging method for the range imaging device 1 including the light receiving unit 3, the light source unit 2, and the range image processing unit 4 described above, and includes an interference light detection step and a timing adjustment step. In the interference light detection step, the range image processing unit 4 causes, without emission of the light pulse PO, the pixel driver circuit 322 to provide electrical connection to the transfer transistors G in the same cycle and storage timing as those with emission of the light pulse PO, before the integration cycle in which the distance is measured, and detects interference light based on the difference between the maximum value and the minimum value of the quantity of interference charge stored in each of the charge storages CS. In the timing adjustment step, the range image processing unit 4 changes the emission timing of the light pulse PO and the storage timing and measures the measurement distance in response to detection of interference light.

Thus, the range imaging method according to the present embodiment has the same effect as the range imaging device 1 described above, and can reduce the influence of interference light and achieve higher accuracy of distance measurement.

### [Second embodiment]

Next, a range imaging device 1a according to the second embodiment will be described with reference to the drawings.

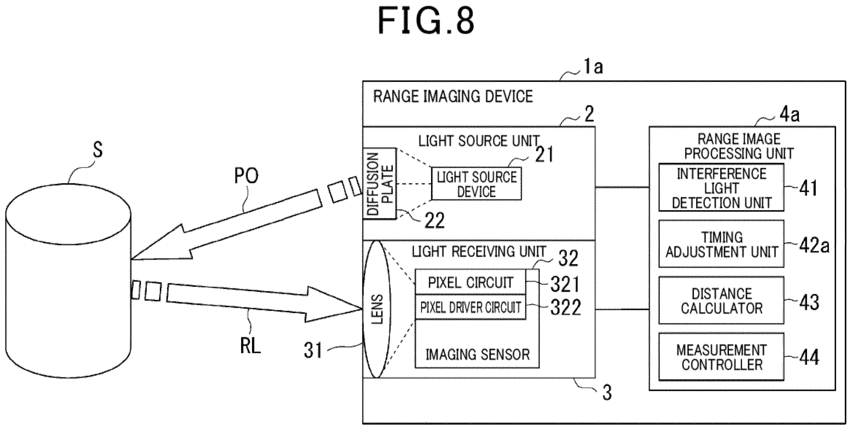

Fig. 8 is a block diagram showing an example of the range imaging device 1a according to the second embodiment.

As shown in Fig. 8, the range imaging device 1a includes the light source unit 2, the light receiving unit 3, and a range image processing unit 4a.

In Fig. 8, the same components as the components in Fig. 1 described above are denoted by the same reference signs, and description thereof is omitted. As with Fig. 1, Fig. 8 also shows the subject S as an object targeted for distance measurement using the range imaging device 1a.

The range image processing unit 4a controls the range imaging device 1a to calculate the distance to the subject S. The range image processing unit 4a measures, as a measurement distance, the distance to the subject S that is present in a measurement space, based on the quantities of charge stored in the respective charge storages CS. For example, in response to detection of interference light, the range image processing unit 4a changes the emission timing of the light pulse PO and the storage timing by randomly changing the integration cycle.

The range image processing unit 4a includes the interference light detection unit 41, a timing adjustment unit 42a, the distance calculator 43, and the measurement controller 44.

In response to detection of interference light, the timing adjustment unit 42a changes the emission timing of the light pulse PO and the storage timing by randomly changing the integration cycle.

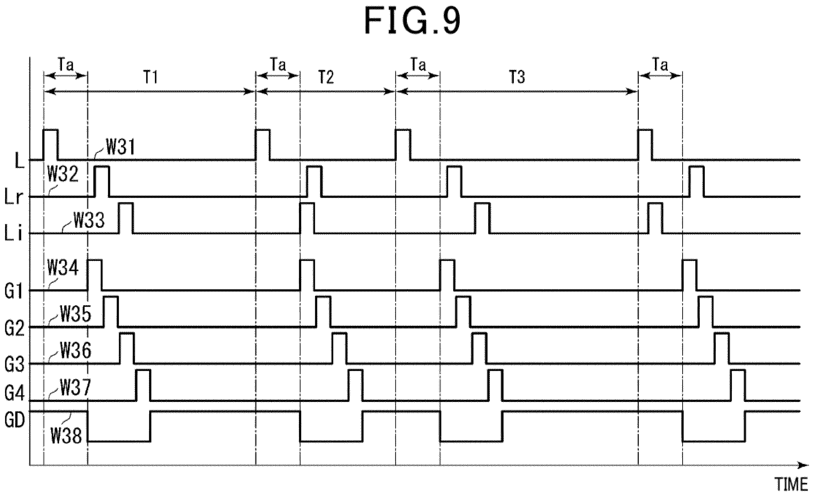

A timing adjustment process performed by the range imaging device 1a according to the present embodiment will be described below with reference to Fig. 9.

Fig. 9 is a timing diagram showing an example of the timing adjustment process performed by the range imaging device according to the present embodiment.

In Fig. 9, waveforms W31 to W38 represent, from top to bottom, the same items as those represented by the waveforms W1 to W8 in Fig. 4 described above. The horizontal axis indicates time.

The example in Fig. 9 shows a modification of the timing adjustment process performed when the presence of interference light is detected by the interference light detection process shown in Fig. 5. As shown in Fig. 9, the timing adjustment unit 42a changes the emission timing of the light pulse PO and the storage timing by randomly changing the integration cycle.

In the example shown in Fig. 9, for example, the timing adjustment unit 42a randomly changes the integration cycle, as in an integration cycle T1, an integration cycle T2, and an integration cycle T3 (see waveforms W31 to W38).

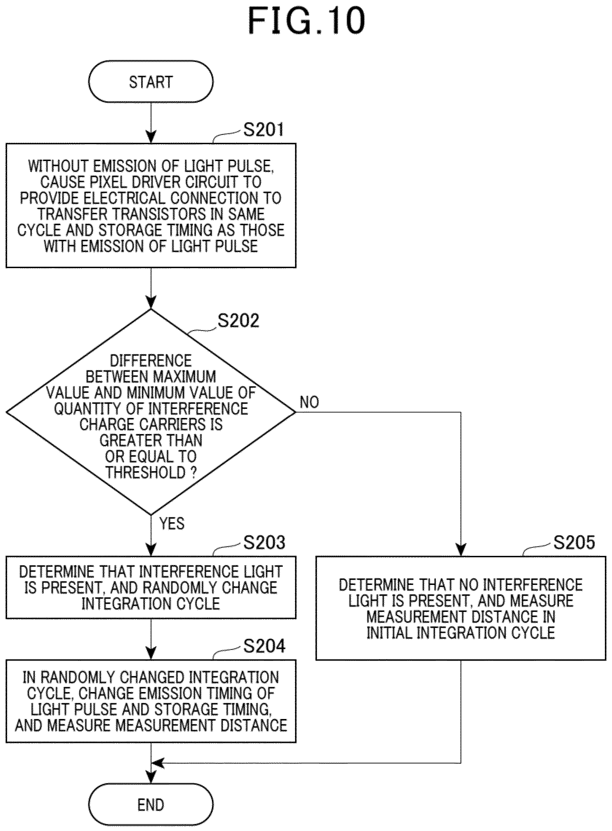

Fig. 10 is a flowchart showing an example of an operation performed by the range imaging device 1a according to the present embodiment.

In Fig. 10, the processes in step S201 and step S202 are the same as those in step S101 and step S102 in Fig. 7 described above, and thus description thereof is omitted. In step S202, when the difference between the maximum value and the minimum value of the quantity of interference charge is greater than or equal to the threshold (YES in step S202), the interference light detection unit 41 causes the process to proceed to step S203. When the difference between the maximum value and the minimum value of the quantity of interference charge is less than the threshold (NO in step S202), the interference light detection unit 41 causes the process to proceed to step S205.

In step S203, the range imaging device 1a determines that interference light is present, and randomly changes the integration cycle. The interference light detection unit 41 determines that interference light is present, and for example, as shown in Fig. 9, the timing adjustment unit 42a of the range imaging device 1a changes the start timing of the integration cycle by randomly changing the integration cycle.

Next, in the randomly changed integration cycle, the range imaging device 1a changes the emission timing of the light pulse PO and the storage timing, and measures the measurement distance (step S204). For example, as shown in Fig. 9, the measurement controller 44 changes and controls the emission timing of the light pulse PO and the storage timing, and the distance calculator 43 acquires the charge quantities Q1 to Q4 stored in the respective charge storages CS, and calculates the delay time Td based on the charge quantities Q1 to Q4 stored in the respective charge storages CS. The distance calculator 43 multiplies the calculated delay time Td by the speed of light (speed) to calculate the round-trip distance to the subject S. After step S204, the range imaging device 1a ends the process.

The process in step S205 is the same as that in step S105 in Fig. 7 described above, and thus description thereof is omitted.

As described above, the range imaging device 1a according to the present embodiment includes the range image processing unit 4a. In response to detection of interference light, the range image processing unit 4a changes the emission timing of the light pulse PO and the storage timing by randomly changing the integration cycle.

Thus, the range imaging device 1a according to the present embodiment randomly changes the integration cycle, allowing interference light to be incident on the transfer transistors G1 to G4 at random timings. Therefore, in the range imaging device 1a according to the present embodiment, an increase in the number of distributions (the number of repetitions of the process of distributing charge) leads to a uniform quantity of charge for incident interference light with respect to the charge quantities Q1 to Q4 stored in the respective charge storages CS. This enables the range imaging device 1a according to the present embodiment to eliminate the influence of interference light by subtracting a uniform offset value. That is, the range imaging device 1a according to the present embodiment can reduce the influence of interference light and achieve higher accuracy of distance measurement.

The present invention is not limited to the above embodiments, and may be modified without departing from the spirit of the present invention.

For example, in the example described in the above embodiments, the pixel circuits 321 each include four charge storages CS (CS1, CS2, CS3, CS4); however, the present invention is not limited to this configuration, and the pixel circuits 321 may include N charge storages CS, where N is greater than or equal to 3.

In the example described in the above embodiments, the range image processing unit 4 (4a) is included in the range imaging device 1 (1a); however, the present invention is not limited to this configuration, and the range image processing unit 4 (4a) may be provided outside the range imaging device 1 (1a).

In the example described in the above embodiments, the photoelectric conversion device PD is an embedded photodiode that performs photoelectric conversion of incident light to generate charge and stores the generated charge; however, the present invention is not limited to this configuration, and the photoelectric conversion device PD may have any structure. The photoelectric conversion device PD may be, for example, a PN photodiode including a P-type semiconductor and an N-type semiconductor joined together, or a PIN photodiode including an I-type semiconductor sandwiched between a P-type semiconductor and an N-type semiconductor. Furthermore, the photoelectric conversion device PD is not limited to a photodiode, and may be, for example, a photogate-type photoelectric conversion device.

The components of the range imaging device 1 (1a) described above have a computer system. The processes performed by the components of the range imaging device 1 (1a) may be performed by recording a program for implementing the functions of the components of the range imaging device 1 (1a) on a computer-readable recording medium and causing the computer system to read and execute the program recorded on the recording medium. Here, "causing the computer system to read and execute the program recorded on the recording medium" includes installing the program on the computer system. The "computer system" here includes an OS and hardware such as peripheral devices.

The "computer system" may include a plurality of computer devices connected to each other through a network including a communication channel such as the Internet, a WAN, a LAN, or a dedicated line. The "computer-readable recording medium" refers to a storage device such as a portable medium, e.g., a flexible disk, a magneto-optical disk, a ROM, a CD-ROM, or the like, or a hard disk incorporated in the computer system. Thus, the recording medium that stores the program may be a non-transitory recording medium such as a CD-ROM.

The recording medium includes an internal or external recording medium accessible from a distribution server for distributing the program. The program may be divided into a plurality of segments, and the program segments may be download at different timings and then combined in the components of the range imaging device 1 (1a), or the program segments may be distributed by different distribution servers. Furthermore, the "computer-readable recording medium" includes a recording medium that holds the program for a given period of time, such as a volatile memory (RAM) in a computer system that serves as a server or a client when the program is transmitted through a network. The above program may be used to implement part of the functions described above. Furthermore, the program may be a program capable of implementing the functions in combination with a program already recorded in the computer system, that is, a differential file (differential program).

Part or all of the functions described above may be implemented as an integrated circuit such as a large-scale integration (LSI). The functions may be individually incorporated into a processor, or part or all of the functions may be integrated into a processor. The functions implemented as an integrated circuit may not necessarily be an LSI, and may be a dedicated circuit or a general-purpose processor. Furthermore, if advances in semiconductor technology provide an integrated circuit technique that replaces LSIs, an integrated circuit obtained using the technique may be used.

### [Reference Signs List]

1, 1a ... Range imaging device
2 ... Light source unit
3 ... Light receiving unit
4, 4a ... Range image processing unit
21 ... Light source device
22 ... Diffusion plate
31 ... Lens
32 ... Range imaging sensor
41 ... Interference light detection unit
42, 42a ... Timing adjustment unit
43 ... Distance calculator
44 ... Measurement controller
320 ... Light receiving region
321 ... Pixel circuit
322 ... Pixel driver circuit
323 ... Vertical scanning circuit
324 ... Horizontal scanning circuit
325 ... Pixel signal processing circuit
326 ... Control circuit
CS, CS1, CS2, CS3, CS4 ... Charge storage
FD, FD1, FD2, FD3, FD4 ... Floating diffusion
G, G1, G2, G3, G4 ... Transfer transistor
GD ... Charge drainage transistor
ML ... Microlens
PD ... Photoelectric conversion device
PO ... Light pulse
RT1, RT2, RT3, RT4 ... Reset transistor
S ... Subject
SF, SF1, SF2, SF3, SF4 ... Source follower transistor
SL, SL1, SL2, SL3, SL4 ... Selection transistor

## Claims

1. A range imaging device comprising:
a light receiving unit including
a plurality of pixel circuits each including
a photoelectric conversion device configured to generate charge based on incident light that is light incident from a measurement space that is a space for which measurement is to be performed,
N charge storages each configured to store at least some of the generated charge in a predetermined integration cycle synchronized with emission of a light pulse, N being greater than or equal to 3, and
transfer transistors each configured to transfer at least some of the generated charge from the photoelectric conversion device to a corresponding one of the N charge storages, and
a pixel driver circuit configured to electrically connect the transfer transistors to the respective N charge storages and distribute and store at least some of the generated charge in the N charge storages at a predetermined storage timing synchronized with the emission of the light pulse;
a light source unit configured to emit the light pulse to the measurement space; and
a range image processing unit configured to measure, as a measurement distance, a distance to a subject that is present in the measurement space, based on quantities of charge stored in the respective N charge storages, wherein
the range image processing unit causes, without emission of the light pulse, the pixel driver circuit to provide electrical connection to the transfer transistors in a cycle and the storage timing that are same as those with emission of the light pulse, before the integration cycle in which the distance is measured, and detects interference light based on a difference between a maximum value and a minimum value of a quantity of interference charge stored in each of the N charge storages, and
the range image processing unit changes an emission timing of the light pulse and the storage timing and measures the measurement distance in response to detection of the interference light.

2. The range imaging device according to claim 1, wherein
in response to detection of the interference light, the range image processing unit changes the emission timing of the light pulse and the storage timing by changing the emission timing of the light pulse without changing the integration cycle.

3. The range imaging device according to claim 2, wherein
in response to detection of the interference light, the range image processing unit changes a start timing of the integration cycle by shifting the emission timing of the light pulse so that a timing of the interference light does not overlap with the storage timing.

4. The range imaging device according to claim 1, wherein
in response to detection of the interference light, the range image processing unit changes the emission timing of the light pulse and the storage timing by randomly changing the integration cycle.

5. The range imaging device according to any one of claims 1 to 4, wherein
the range image processing unit determines that interference light is present in response to the difference between the maximum value and the minimum value being greater than or equal to a threshold.

6. The range imaging device according to any one of claims 1 to 4, wherein
in response to there being no detection of the interference light, the range image processing unit measures the measurement distance without changing the integration cycle or a start timing of the integration cycle.

7. A range imaging method for a range imaging device including:
a light receiving unit including
a plurality of pixel circuits each including
a photoelectric conversion device configured to generate charge based on incident light that is light incident from a measurement space that is a space targeted for measurement,
N charge storages each configured to store at least some of the generated charge in a predetermined integration cycle synchronized with emission of a light pulse, N being greater than or equal to 3, and
transfer transistors each configured to transfer at least some of the generated charge from the photoelectric conversion device to a corresponding one of the N charge storages, and
a pixel driver circuit configured to electrically connect the transfer transistors to the respective N charge storages and distribute and store at least some of the generated charge in the N charge storages at a predetermined storage timing synchronized with the emission of the light pulse;
a light source unit configured to emit the light pulse to the measurement space; and
a range image processing unit configured to measure, as a measurement distance, a distance to a subject that is present in the measurement space, based on quantities of charge stored in the respective N charge storages, the range imaging method comprising:
an interference light detection step to be performed by the range image processing unit of causing, without emission of the light pulse, the pixel driver circuit to provide electrical connection to the transfer transistors in a cycle and the storage timing that are same as those with emission of the light pulse, before the integration cycle in which the distance is measured and detecting interference light based on a difference between a maximum value and a minimum value of a quantity of interference charge stored in each of the N charge storages; and
a timing adjustment step to be performed by the range image processing unit of changing an emission timing of the light pulse and the storage timing and measuring the measurement distance in response to detection of the interference light.
